# EUROPÄISCHE PATENTSCHRIFT

(11) **EP 3 692 269 B1**
(45) Veröffentlichungstag und Bekanntmachung des Hinweises auf die Patenterteilung: **08.01.2025**
(21) Anmeldenummer: 18782001.4
(22) Anmeldetag: 26.09.2018
(51) Int. Cl.: F16B 21/07, F16B 5/06

(54) **WINKELKUPPLUNG**
ANGLE COUPLING
ACCOUPLEMENT ANGULAIRE

(30) Priorität: 09.10.2017 DE 102017123424
(43) Veröffentlichungstag der Anmeldung: 12.08.2020
(73) Patentinhaber: Böllhoff Verbindungstechnik GmbH, 33649 Bielefeld (DE)
(72) Erfinder: KAHRE, Michael, 32052 Herford (DE); MATTHES, Jörg, 32051 Herford (DE)
(74) Vertreter: HWP Intellectual Property
(86) Internationale Anmeldenummer: PCT/EP2018/076064
(87) Internationale Veröffentlichungsnummer: WO 2019/072556

(56) Entgegenhaltungen:
- EP-A1- 0 896 162
- EP-A2- 0 229 350
- DE-A1- 102009 021 120
- DE-U1- 202009 004 178
- JP-U- H0 284 008
- US-A1- 2015 034 040

## Beschreibung

### 1. Gebiet der Erfindung

Die vorliegende Erfindung betrifft eine Winkelkupplung zur Befestigung eines Anbauteils an einer tragenden Struktur, insbesondere eine Leuchte an einer Fahrzeugkarosserie, bestehend aus einer Kupplungsaufnahme für einen Kupplungsbolzen und dem entsprechenden Kupplungsbolzen.

### 2. Hintergrund der Erfindung

In den verschiedensten technischen Gebieten werden zwei Teile mit Hilfe eines Kupplungsbolzens und einer entsprechenden Kupplungsaufnahme für diesen Kupplungsbolzen miteinander verbunden. Im Fahrzeugbau erfolgt auf diese Weise die Befestigung von Abdeckungen im Motorraum, von Verkleidungsteilen im Innenraum sowie die Montage von Leuchten an der Fahrzeugkarosserie. Ein ähnliches Vorgehen findet sich in anderen Gebieten, wo ein Befestigen durch eine einfache Rastverbindung ausreichend ist.

Derartige Kupplungen bestehen aus einem Kupplungsbolzen mit einem kugelförmigen Kopf und einer Kupplungsaufnahme, in der ein Kugelfang für den kugelförmigen Kopf vorgesehen ist. Innerhalb des Kugelfangs ist der kugelförmige Kopf lösbar oder nicht lösbar aufgenommen, wenn Kupplungsbolzen und Kupplungsaufnahme miteinander verbunden worden sind.

In bekannten Kupplungen sind vor dem Verbinden von Kupplungsbolzen und Kupplungsaufnahme deren mittlere Längsachsen parallel zueinander ausgerichtet. Auf dieser Grundlage wird beispielsweise im Fahrzeugbau eine Rückleuchte durch eine Einsetzbewegung in Fahrtrichtung, also in x-Richtung, an einer dafür vorgesehenen Stelle der Karosserie montiert. Daher ist die Kupplungsaufnahme an senkrecht zur Fahrtrichtung ausgerichteten Bauteilwänden vormontiert. Dies gewährleistet ein problemloses Montieren und Einrasten des Kupplungsbolzens in der Kupplungsaufnahme.

Nicht nur im Fahrzeugbau nimmt jedoch die Formenvielfalt zu, so dass beispielsweise eine Rückleuchte in einer Vertiefung der Karosserie mit schrägen Karosseriewänden befestigt werden muss. Die Längsachse von an diesen schrägen Karosseriewänden installierten Kupplungsaufnahmen für Kupplungsbolzen ist senkrecht zu diesen Karosseriewänden orientiert, was jedoch gleichzeitig eine winklige Ausrichtung dieser Längsachse zur Fahrtrichtung zur Folge hat. Daher müssen die Kupplungsbolzen beispielsweise an der Rückleuchte geneigt vormontiert werden, damit deren Längsachse wiederum parallel zur mittleren Längsachse der Aufnahme ausgerichtet ist. Anderenfalls wäre kein verlässliches Einrasten des Kupplungsbolzens in der in der Karosserie vormontierten Kupplungsaufnahme gewährleistet. Um diese spezielle Ausrichtung von Kupplungsbolzen und Kupplungsaufnahme zueinander zu erzielen, ist die Vormontage der Kupplungsbolzen komplizierter geworden. Zudem tritt trotz der speziellen Anordnung des Kupplungsbolzens im Verhältnis zur Kupplungsaufnahme häufig ein Verkanten beispielsweise der Rückleuchte beim Einsetzen in die dafür vorgesehene Vertiefung der Karosserie mit schrägen Karosseriewänden auf. Dieses Verkanten verlängert die Montagezeit und beeinträchtigt häufig die Qualität des Montageergebnisses.

Im Stand der Technik sind verschiedene Konstruktionen von Kupplungsaufnahmen bekannt, die einen Winkelausgleich ermöglichen. Dazu wird der Kupplungsbolzen, meist ein Bolzen mit Kugelkopf, in die Kupplungsaufnahme eingesetzt und dort verrastet. Die Kupplungsaufnahme aus US 4,520,689 dient der Übertragung von Drehbewegungen in einer Scheibenwischeranordnung eines Kraftfahrzeugs. Obwohl der Kugelkopf des Kupplungsbolzens fest in der Kupplungsaufnahme verrastet ist, sind dennoch aufgrund der Gestaltung des Innenraums der Kupplungsaufnahme eingeschränkte Bewegungen des Kupplungsbolzens möglich. Im Speziellen kann der Kupplungsbolzen in einem Raumwinkelbereich geringer Ausdehnung verschwenken. Dieser Raumwinkelbereich ist aber klein, da der Kupplungsbolzen vollständig durch den kreisförmigen Rand der Einsetzöffnung der Kupplungsaufnahme umgeben ist.

EP 0 572 313 B1 und DE 10 2013 102 197 A1 beschreiben jeweils eine Kupplungsaufnahme, die eine hohe Ausziehkraft dem Entfernen des Kupplungsbolzens aus der Kupplungsaufnahme entgegensetzt. Im Hinblick auf ihre Konstruktion favorisieren diese Kupplungsaufnahmen ein Verrasten des Kupplungsbolzens, welches gleichzeitig neben dem Halt auch ein Verschwenken in einem Raumwinkelbereich erlaubt. Eine Mehrzahl federnder Stege ist in diesen Kupplungsaufnahmen derart angeordnet, dass sie in Richtung des Inneren der Kugelpfanne geneigt sind. Da diese Stege dem Ausziehen des Kupplungsbolzens aus der Kupplungsaufnahme entgegenwirken, sind die Ausziehkräfte für den Kopf des Kupplungsbolzens relativ hoch.

Werden die oben genannten Kupplungen mit einer Schwenkmöglichkeit des Kugelbolzens in einem Raumwinkelbereich beispielsweise zur Befestigung von Anbauteilen im Kraftfahrzeugbau eingesetzt, dann bringen diese Kupplungen einen hohen Justieraufwand mit sich. Denn sobald ein Anbauteil mit beispielsweise zwei in einem Raumwinkelbereich schwenkbaren Kupplungen befestigt wird, dann muss entsprechend der Werker bei der Installation des Anbauteils die Spaltmaße in allen möglichen Raumrichtungen kontrollieren und einstellen. Des Weiteren ist von Nachteil, dass diese mit hoher Bewegbarkeit ausgestatteten Anbauteile durch Befestigung über die oben beschriebenen Kupplungen zusätzliche Befestigungspunkte benötigen, um die justierten Anbauteile dauerhaft festzulegen.

Um den Justieraufwand bei der Installation von Anbauteilen beispielsweise im Automobilbau zu reduzieren, beschreibt DE 20 2009 004 178 U1 eine Winkelkupplung, die eine feste Winkelanordnung zwischen Anbauteil und Rohbaustruktur oder Karosseriestruktur bereitstellt. Diese auf einen festen Winkel eingestellte Winkelkupplung reduziert zwar den Montageaufwand des Werkers auf ein Minimum, ist aber gleichzeitig auf nur einen Anwendungsfall beschränkt. Daher ist es erforderlich, für Anbausituationen mit unterschiedlichen Winkelausrichtungen speziell daran angepasste Winkelkupplungen herzustellen. Im Vergleich zu den oben beschriebenen Kupplungen mit Verschwenkbarkeit in einem Raumwinkel hat aber die Winkelkupplung mit fest eingestelltem Winkel den Vorteil, dass auch mit einer geringen Zahl an Fixpunkten das Anbauteil am Rohbau befestigt werden kann.

Eine weitere Kupplungsaufnahme ist aus der JPH0284008U bekannt.

Um sich flexibler auf unterschiedliche Installationssituationen einstellen zu können und neben einem geringen Montageaufwand auch eine flexibel einsetzbare Kupplung anwenden zu können, ist es die Aufgabe vorliegender Erfindung, eine alternative Winkelkupplung im Vergleich zu den oben beschriebenen Kupplungen mit Raumwinkelausgleich und der Kupplung mit fester Winkeleinstellung bereitzustellen.

### 3. Zusammenfassung der Erfindung

Die obige Aufgabe wird durch eine Kupplungsaufnahme gemäß Patentanspruch 1, durch eine Winkelkupplung gemäß Patentanspruch 8, durch ein Herstellungsverfahren für eine Kupplungsaufnahme gemäß Patentanspruch 9 oder 10 sowie durch ein Installationsverfahren für die Kupplungsaufnahme gemäß Patentanspruch 11 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Die erfindungsgemäße Kupplungsaufnahme, in der ein Kopf eines Kupplungsbolzens zur Befestigung von mindestens zwei Bauteilen aneinander verrastbar ist, weist die folgenden Merkmale auf ein kuppelartiges Gewölbe aus einer umlaufenden, vorzugsweise geschlossenen, Wand, welches ein offenes Ende mit einer Einstecköffnung für ein Einstecken des Kupplungsbolzens in einer Einsteckrichtung und ein Ende mit einer dazu benachbarten inneren Verraststruktur für den Kopf des Kupplungsbolzens aufweist, einen Befestigungsbund, der die Einstecköffnung umgibt und der eine Öffnungsfläche der Einstecköffnung einschließt, die Einstecköffnung hat eine unrunde Form, sodass die Öffnungsfläche durch eine Längsachse und eine dazu quer verlaufende kürzere Querachse beschreibbar ist, wobei das kuppelartige Gewölbe eine gedachte Schwenkebene aufgespannt durch die Längsachse der Einsetzöffnung und die Einsetzrichtung einschließt, die eine variable Winkelorientierung des verrastbaren Kupplungsbolzens in einem ebenen Winkelbereich definiert, der maximal durch eine Innenwand des kuppelartigen Gewölbes begrenzt wird.

Die Kupplungsaufnahme dient der Befestigung eines Kopfes eines Kupplungsbolzens. Der Kopf des Kupplungsbolzens kann bekanntermaßen unterschiedliche Formen aufweisen, wie beispielsweise eine Kugel, eine Linse oder eine anderweitige Verdickung, die in einem Aufnahmeraum verrastbar ist. Vorzugsweise wird in Kombination mit vorliegender Kupplungsaufnahme ein Kupplungsbolzen mit einem Kugelkopf verwendet. Die anderen oben genannten Formen des Kopfes des Kupplungsbolzens sind aber gleichermaßen zur Umsetzung vorliegender Erfindung verwendbar, solange die Form des Kopfes ein Verschwenken des Kupplungsbolzens innerhalb der Kupplungsaufnahme in einem bestimmten Winkelbereich im verrasteten Zustand zulässt.

Das kuppelartige Gewölbe weist gemäß bevorzugter Ausführungsform ein geschlossenes Ende auf, in dem vorzugsweise eine Kugelpfanne ausgebildet ist. Das geschlossene Ende unterstützt eine Dichtfunktion der Kupplungsaufnahme in Kombination mit einem bevorzugten Dichtkragen, der unten näher beschrieben ist. Es ist ebenfalls bevorzugt, das Ende des kuppelartigen Gewölbes teilweise offen vorzusehen, solange die Befestigung des Kopfes des Kupplungsbolzens gewährleistet ist.

Das kuppelartige Gewölbe weist zudem eine Einstecköffnung für den Kupplungsbolzen auf. Diese Einstecköffnung ist derart geformt, dass sie in einer Ebene ein Verschwenken des Kupplungsbolzens im Bereich eines Schwenkwinkels erlaubt, während sie gleichzeitig Schwenkbewegungen des Kupplungsbolzens aus dieser Schwenkebene heraus blockiert. Dieses Blockieren wirkt sich positiv als eine laterale Abstützung des Kupplungsbolzens aus, während er variabel auf den gewünschten Winkel innerhalb der Schwenkebene eingestellt werden kann. Dieses Verschwenken stellt entsprechend der miteinander zu verbindenden zwei Bauteile die winklige Orientierung zwischen dem Kupplungsbolzen und der Kupplungsaufnahme her. Der oben beschriebene Freiheitsgrad in der Bewegung des in der Kupplungsaufnahme verrasteten Kupplungsbolzens wird bevorzugt durch die Formgebung der Einstecköffnung der Kupplungsaufnahme festgelegt. Denn diese Einstecköffnung hat bevorzugt eine axialsymmetrische Form, die durch eine Längsachse innerhalb der oben beschriebenen Schwenkebene und einer quer dazu verlaufenden Querachse beschreibbar ist. Vorzugsweise ist die Einstecköffnung oval geformt. Gemäß einer anderen bevorzugten Ausführungsform ist die Einstecköffnung rechteckig mit einer kurzen und einer langen Seitenfläche ausgebildet. Die ovale Form wird beispielsweise durch eine Ellipse oder zusammengesetzt aus Kreisbögen und geraden Stücken gebildet. Maßgeblich für die Form der Einstecköffnung ist es, dass sie entlang einer Achsrichtung, vorzugsweise der Längsachse oder einer längeren Seite, ein Verschwenken des verrasteten Kupplungsbolzens innerhalb der Kupplungsaufnahme erlaubt. Senkrecht zu dieser Längsachse blockiert bevorzugt die Formgebung der Einstecköffnung ein weiteres Bewegen des Kupplungsbolzens. Diese Funktionen werden durch die ovale und die rechteckige Einstecköffnung realisiert.

Gemäß einer bevorzugten Ausführungsform vorliegender Erfindung ist der verrastbare Kupplungsbolzen in einem Winkelbereich von 0° < α ≤ 60°, vorzugsweise 0° < α ≤ 45° oder 0° < α ≤ 35°, innerhalb des kuppelartigen Gewölbes schwenkbar, wenn der Kopf des Kupplungsbolzens in der inneren Verraststruktur verrastet ist.

Gemäß einer weiteren bevorzugten Ausführungsform der erfindungsgemäßen Kupplungsaufnahme weist diese zwei einander gegenüberliegende Abschnitte, vorzugsweise Wandabschnitte oder längere Seiten der Einstecköffnung, auf, die senkrecht zur Querachse angeordnet sind und eine seitliche Führung des verrastbaren Kupplungsbolzens bei variabler Winkelorientierung des Kupplungsbolzens bilden.

Die bevorzugten oben genannten Abschnitte werden vorzugsweise durch geradlinig verlaufende Abschnitte des Randbereichs der Einstecköffnung gebildet. Gemäß einer weiteren bevorzugten Ausführungsform werden diese geradlinig verlaufenden Abschnitte durch Wandabschnitte des Gewölbes der Kupplungsaufnahme gebildet. Wie sich aus der oben genannten Orientierung dieser Abschnitte ergibt, verlaufen diese Abschnitte parallel zur Schwenkebene des Kupplungsbolzens. In gleicher Weise verlaufen diese geradlinigen Abschnitte parallel zur Längsachse der die Einsetzöffnung aufspannenden Öffnungsfläche. Weiterhin bevorzugt sind diese einander gegenüberliegend angeordneten Abschnitte derart voneinander beabstandet, dass sie lediglich eine Bewegbarkeit des Kupplungsbolzens innerhalb der Schwenkebene erlauben. Je nach Geometrie des Kupplungsbolzens sind im Rahmen dieser Bewegungseinschränkung natürlich gewisse Toleranzen möglich. Wesentlich ist aber, dass diese geraden Abschnitte eine laterale Führung für die bereitgestellte winklige Schwenkbewegung des Kupplungsbolzens innerhalb der Kupplungsaufnahme bereitstellen.

Gemäß einer weiteren bevorzugten Ausführungsform vorliegender Erfindung weist die umlaufende Wand des kuppelartigen Gewölbes an einer radialen Außenseite benachbart zum Befestigungsbund eine Mehrzahl umfänglich verteilter Rastnasen mit Einführschräge auf, die einen Hinterschnitt entgegen der Einsteckrichtung des Kupplungsbolzens in die Kupplungsaufnahme bilden.

Zur Herstellung einer Verbindung zwischen zwei Bauteilen wird zunächst die Kupplungsaufnahme in einer Installationsöffhung einer Rohbaustruktur angeordnet. Die Befestigung der Kupplungsaufnahme in dieser Öffnung ist derart ausgelegt, dass ein Öffnungsrand der Installationsöffnung zwischen der jeweiligen Hinterschnittfläche der Rastnasen und dem Befestigungsbund der Kupplungsaufnahme gehalten wird. Die Hinterschnittflächen der einzelnen Rastnasen sind derart konfiguriert und angeordnet, dass sie ein Lösen der Kupplungsaufnahme aus der Installationsöffnung entgegen der zuvor genutzten Installationsrichtung verhindern.

Um die oben beschriebene Anordnung der Kupplungsaufnahme in der Installationsöffnung zu unterstützen, weist der Befestigungsbund gemäß einer weiteren bevorzugten Ausführungsform vorliegender Erfindung einen umfänglich angeordneten, in Einsteckrichtung der Kupplungsaufnahme geneigt angeordneten flexiblen Dichtkragen auf. Dieser Dichtkragen ist derart ausgebildet, dass er sich vorzugsweise bis auf eine Höhe des durch die Rastnasen gebildeten Hinterschnitts bzw. bis auf die Höhe der an den Rastnasen ausgebildeten Hinterschnittflächen erstreckt.

Während sich der bevorzugte Dichtkragen nach Installation der Kupplungsaufnahme in der Installationsöffnung an die Rohbaustruktur anlegt, realisiert er aufgrund seiner Konfiguration zumindest zwei wesentliche Funktionen. Die eine Funktion besteht darin, dass die Anlage des Dichtkragens an der Rohbaustruktur eine Abdichtung gegen das Eindringen von Flüssigkeiten oder Staub oder Ähnliches in die Verbindung aus Kupplungsaufnahme und Rohbaustruktur gewährleistet. Diese Dichtfunktion ist durch die federnde Form und/oder Materialgestaltung des Dichtkragens realisierbar. Zudem wird diese Dichtfunktion bevorzugt durch das kuppelartige Gewölbe mit dem geschlossenen Ende unterstützt (siehe oben).

Die Federwirkung des Dichtkragens führt vorzugsweise aber auch dazu, dass die einzelnen Hinterschnittflächen der Rastnasen in Anlage an die Rohbaustruktur angrenzend an den Rand der Installationsöffnung gebracht werden. Dies gewährleistet einen verlässlichen Halt innerhalb der Installationsöffnung sowie die Vermeidung von Schwingungsbewegungen der Kupplungsaufnahme nach Installation in der Installationsöffnung. In diesem Zusammenhang ist das kuppelartige Gewölbe mit teilweise offenem oder geschlossenem Ende nutzbar.

Gemäß einer weiteren bevorzugten Ausführungsform umfasst die Kupplungsaufnahme am geschlossenen Ende des Gewölbes eine Kugelpfanne in Kombination mit einem von einer Innenwand des Gewölbes radial einwärts ragenden Raststeg. Mithilfe dieser Konstruktion wird der Kugelkopf des Kupplungsbolzens verrastend und innerhalb eines ebenen Winkelbereichs schwenkbar innerhalb der Kupplungsaufnahme befestigt.

Vorliegende Erfindung umfasst zudem eine Winkelkupplung zur Befestigung eines ersten Bauteils, insbesondere ein Anbauteil im Kraftfahrzeug, an einem zweiten Bauteil, insbesondere eine Fahrzeugrohbaustruktur, die einen Kupplungsbolzen mit einem Kopf und eine Kupplungsaufnahme gemäß einer der oben beschriebenen Ausgestaltungen aufweist. In dieser erfindungsgemäßen Winkelkupplung ist der Kupplungsbolzen in einem Winkelbereich verschwenkbar, während der Kopf des Kupplungsbolzens lösbar oder nicht lösbar verrastet ist.

Vorliegende Erfindung offenbart auch ein Herstellungsverfahren für die oben beschriebene Kupplungsaufnahme, welches die folgenden Schritte aufweist: Bereitstellen einer Spritzgussform, die die Form der Kupplungsaufnahme gemäß einer der oben beschriebenen Ausführungsformen definiert, Spritzgießen der Kupplungsaufnahme in der Spritzgussform und Entformen der Kupplungsaufnahme aus der Spritzgussform.

Ein alternatives erfindungsgemäßes Herstellungsverfahren für die Kupplungsaufnahme besteht darin, die Kupplungsaufnahme gemäß einer der oben beschriebenen Ausführungsformen mithilfe eines additiven Verfahrens herzustellen. Die additive Fertigung bezeichnet einen Prozess, bei dem auf der Basis von digitalen 3D-Konstruktionsdaten durch das Ablagern von Material schichtweise ein Bauteil aufgebaut wird. Allgemein werden diese Verfahren auch als 3D-Druck bezeichnet. Es handelt sich somit nicht um ein konventionell abtragendes Fertigungsverfahren, sondern um den schichtweisen Aufbau des Bauteils. Als Materialien sind beispielsweise Kunststoffe und Verbundwerkstoffe einsetzbar. Diese Materialien werden über die gezielte Wärmezufuhr schichtweise in die passende Form gebracht und benachbarte Schichten werden entsprechend mittels dieser Energiezufuhr untereinander vernetzt, sodass beispielsweise die oben beschriebene Kupplungsaufnahme herstellbar ist.

Vorliegende Erfindung offenbart außerdem ein Installationsverfahren für die Kupplungsaufnahme, die oben gemäß unterschiedlicher bevorzugter Ausführungsformen beschrieben worden ist. Im Rahmen des Installationsverfahrens wird die Kupplungsaufnahme in einer unrunden, vorzugsweise nicht eckigen oder eckigen, Installationsöffnung mit Öffnungsrand eines Bauteils angeordnet. Das Installationsverfahren weist die folgenden Schritte auf: angrenzend an ein Ende der Längsachse der Öffnungsfläche der Einstecköffnung erfolgt ein Einklemmen eines Abschnitts des Öffnungsrands zwischen mindestens einer Rastnase und dem Befestigungsbund. Dann findet ein Längen der Kupplungsaufnahme in Einsteckrichtung bzw. Installationsrichtung statt und die Kupplungsaufnahme wird in Einsteckrichtung bzw. Installationsrichtung in die Installationsöffnung versetzt. Danach erfolgt ein Verrasten der Kupplungsaufnahme in der Installationsöffnung, indem der Öffnungsrand zwischen einer Mehrzahl von Rastnasen und dem Befestigungsbund gehalten wird.

Der bevorzugte Schritt des Längens der Kupplungsaufnahme bedeutet, dass mithilfe eines in das Innere des Gewölbes eingreifenden Werkzeugs die Kupplungsaufnahme in Einsetzrichtung bzw. Installationsrichtung gedrückt wird. Da der Befestigungsbund am Öffnungsrand der Installationsöffnung gehalten wird, erzeugt das in den Hohlraum der Kupplungsaufnahme eingreifende Werkzeug eine Zugspannung in Einsetzrichtung auf die Kupplungsaufnahme.

Dies führt zu einer Streckung der Kupplungsaufnahme, die eine Verjüngung in radialer Richtung der Kupplungsaufnahme zur Folge hat. Auf diese Weise wird das Einsetzen der Kupplungsaufnahme in die Installationsöffnung erleichtert, bis der Öffnungsrand zwischen der Hinterschnittfläche der einzelnen Rastnasen und dem Dichtkragen einrastet. Es ist anzumerken, dass die Einsetzrichtung und die Installationsrichtung parallel zueinander sind.

### 4. Detaillierte Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine perspektivische Explosionsdarstellung der Winkelkupplung mit Kupplungsaufnahme und Kupplungsbolzen,
- Figur 2a-c: mehrere perspektivische seitliche Darstellungen des in der Kupplungsaufnahme verrasteten Kupplungsbolzens in unterschiedlichen Winkelorientierungen in Bezug auf die Kupplungsaufnahme,
- Figur 3: eine seitliche Schnittdarstellung des Kupplungsbolzens, der in der Kupplungsaufnahme verrastet ist,
- Figur 4: eine weitere seitliche Schnittdarstellung des in der Kupplungsaufnahme verrasteten Kupplungsbolzens in einer anderen Winkelausrichtung im Vergleich zu Figur 3,
- Figur 5: eine perspektivische Darstellung einer bevorzugten Ausführungsform der Kupplungsaufnahme,
- Figur 6a: eine weitere perspektivische Ansicht einer bevorzugten Ausführungsform der Kupplungsaufnahme,
- Figur 6b: eine Veranschaulichung einer bevorzugten Ausführungsform der Einsetzfläche der Einsetzöffnung,
- Figur 7: eine seitliche Schnittdarstellung der Kupplungsaufnahme zur bevorzugten Veranschaulichung der Verschwenkung des Kupplungsbolzens,
- Figur 8: eine seitliche Schnittdarstellung der Kupplungsaufnahme parallel zur Querachse der Einsetzöffnung,
- Figur 9: eine Ausschnittsvergrößerung einer bevorzugten Konstruktion des Befestigungsbunds mit Dichtkragen und Rastnasen,
- Figur 10: eine Darstellung einer bevorzugten Form der Installationsöffnung im ersten Bauteil,
- Figur 11: eine schematische Veranschaulichung eines bevorzugten Installationsschritts zur Befestigung der Kupplungsaufnahme in der Installationsöffnung.

### 5. Detaillierte Beschreibung der bevorzugten Ausführungsformen der Erfindung

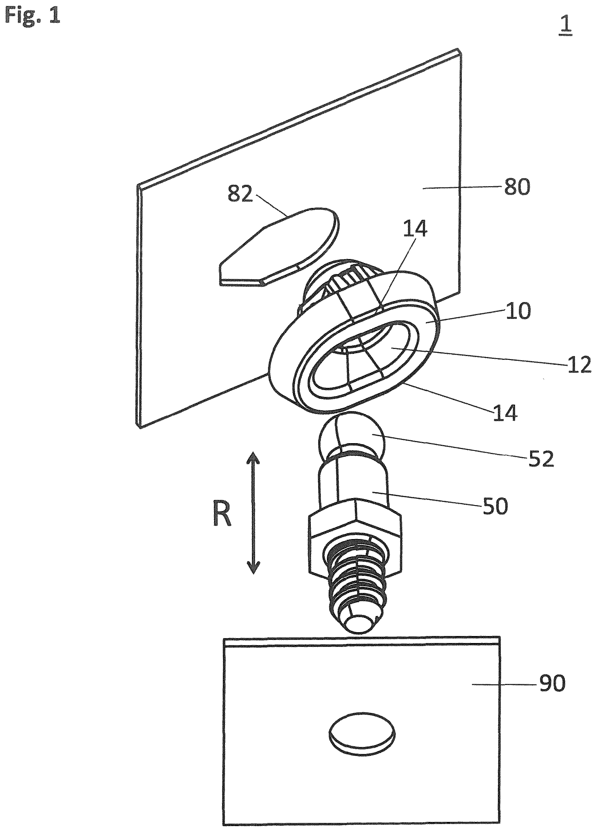

Figur 1 zeigt eine Explosionsdarstellung einer bevorzugten Winkelkupplung 1, die sich aus einer Kupplungsaufnahme 10 und einem Kupplungsbolzen 50 mit Kupplungskopf 52 zusammensetzt. Die Kupplungsaufnahme 10 wird in einer Installationsöffnung 82 eines ersten Bauteils 80 befestigt. Das erste Bauteil 80 ist bevorzugt eine Rohbaustruktur eines Fahrzeugs, ein Trägerelement in der Bauindustrie oder ein Rahmenelement im Maschinenbau.

Der Kupplungsbolzen 50 ist mit einem zweiten Bauteil 90 verbunden. Hier handelt es sich bevorzugt um ein Anbauteil, wie beispielsweise eine Leuchte oder ein Cover, im Fahrzeugbau oder allgemein um ein Anbauelement. Der Kupplungsbolzen 50 wird gemäß bekannter Verfahren mit dem zweiten Bauteil 90 verschraubt, verklebt, vernietet, verrastet oder anderweitig verlässlich lösbar oder nicht lösbar verbunden.

Gemäß einer bevorzugten Ausführungsform vorliegender Erfindung ist der Kupplungskopf 52 ein Kugelkopf. Im Folgenden wird der Kupplungsbolzen 50 mit Kugelkopf 52 beispielgebend für alle denkbaren Kopfgeometrien beschrieben. Zu diesen Kopfgeometrien zählen beispielsweise ein Linsenkopf, ein Polyederkopf oder andere bekannte Kopfgeometrien, die ein Verrasten und Verschwenken in einer Kupplungsaufnahme erlauben.

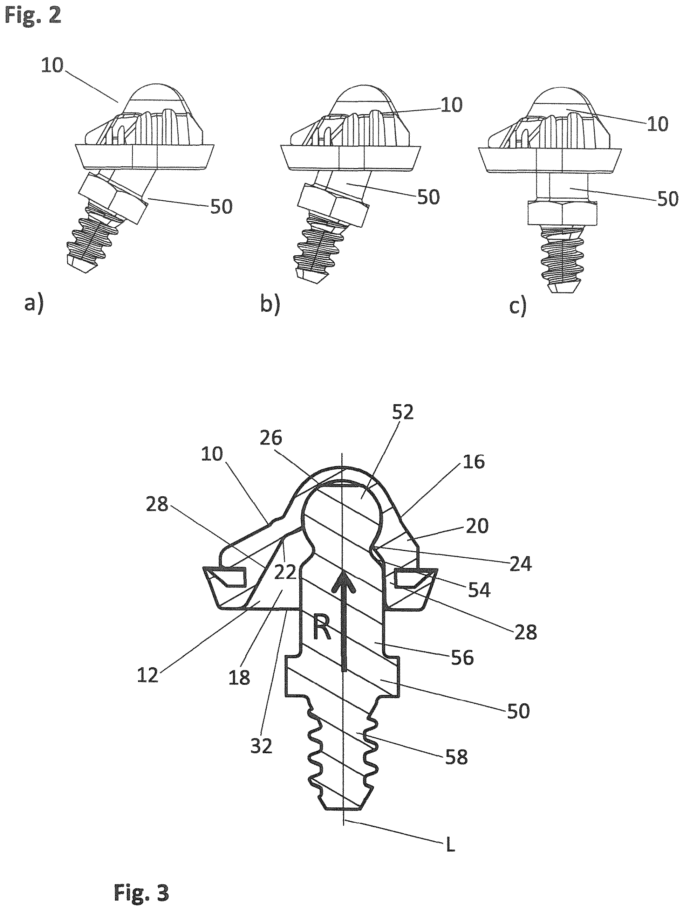

Der Kupplungskopf 52 ist in der Kupplungsaufnahme 10 lösbar verrastbar. Um trotz einer winkligen Anordnung der beiden Bauteile 80, 90 zueinander eine verlässliche Verbindung zu gewährleisten, sind der Kupplungsbolzen 50 und die Kupplungsaufnahme 10 in einer variablen Winkeleinstellung zueinander verbindbar. Das bedeutet, dass der Kupplungsbolzen 50 mit einem in der Kupplungsaufnahme 10 verrasteten Kupplungskopf 52 unterschiedliche Winkelorientierungen in einer Schwenkebene einnehmen kann. Mit diesen unterschiedlichen Winkelorientierungen wird die Winkelkupplung 1 an unterschiedliche Bauteilausrichtungen zueinander variabel angepasst. Diese unterschiedlichen Orientierungsmöglichkeiten des Kupplungsbolzens 50 in der Kupplungsaufnahme 10 veranschaulichen die Figuren 2a-c.

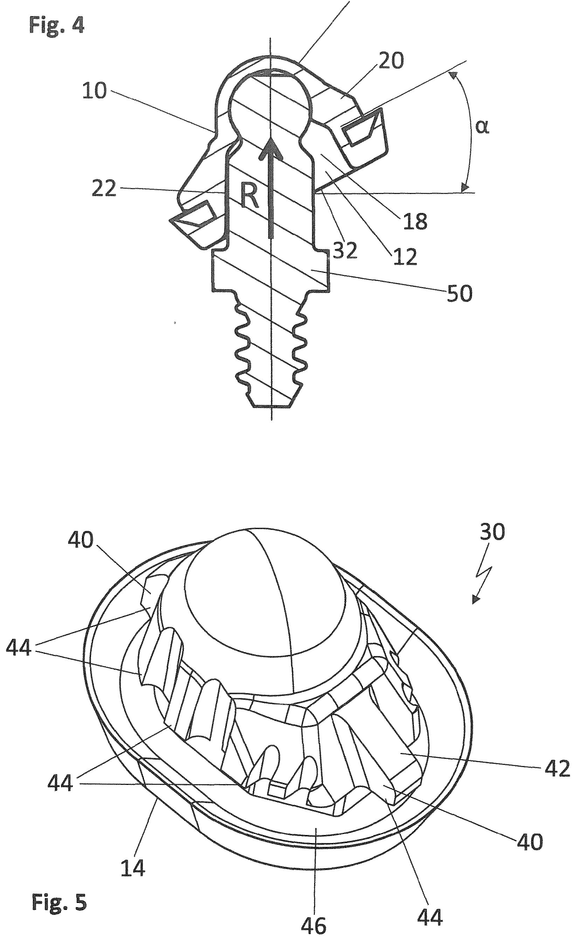

Die Figuren 3 und 4 zeigen jeweils einen Schnitt durch die Kupplungsaufnahme 10 und den Kupplungsbolzen 50. Dabei ist der Kupplungsbolzen 50 in Längsrichtung geschnitten. Die Kupplungsaufnahme 10 ist parallel zu einer längeren Seite 14 einer Einsetzöffnung 12 geschnitten dargestellt. Wie in den Figuren 3-5 erkennbar ist, umfasst die Kupplungsaufnahme 10 ein kuppelartiges Gewölbe 16, welches einen Aufnahme- und Befestigungsraum 18 für den Kupplungsbolzen 50 bildet. Das kuppelartige Gewölbe 16 besteht bevorzugt aus einer durchgehend umlaufenden Wand 20. An einer Innenseite 22 der Wand 20 ist ein Raststeg 24 vorgesehen. Der Raststeg 24 wirkt mit einer Kugelpfanne 26 zusammen, um den Kupplungsbolzen 50 über den Kugelkopf 52 trotz Schwenkbarkeit des Kupplungsbolzens 50 zu halten. Entsprechend den Figuren 3 - 5 ist die Kugelpfanne 26 benachbart zu einem geschlossenen Ende des Gewölbes 16 angeordnet. Es ist ebenfalls bevorzugt, das zur Kugelpfanne 26 benachbarte Ende offen auszubilden, solange die Befestigung des Kopfs des Kugelbolzens 50 gewährleistet ist.

Der Kugelkopf 52 ist über einen verjüngten Abschnitt 54 mit einem zylindrischen Schaft 56 verbunden. Der zylindrische Schaft 56 weist ein Befestigungsende 58, hier mit einem bevorzugten Gewinde, auf, um den Kupplungsbolzen 50 an dem zweiten Bauteil 90 zu befestigen. Der verjüngte Abschnitt 54 bildet bevorzugt einen Aufnahmeraum für den Raststeg 24, um eine größtmögliche Verschwenkbarkeit des Kupplungsbolzens 50 in der Kugelpfanne 26 und der Schwenkebene zu gewährleisten.

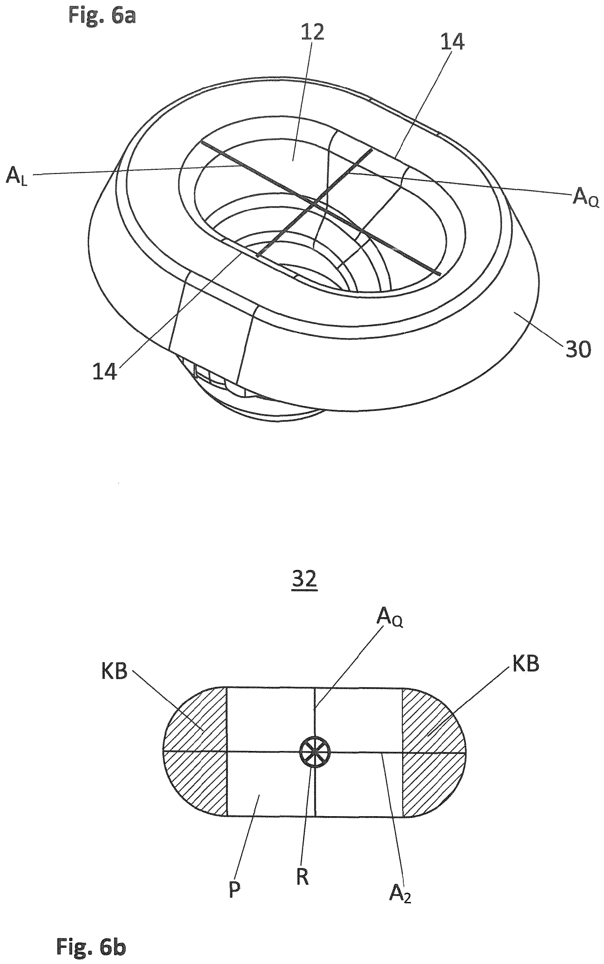

Der zylindrische Schaft 56 dient einer radialen Abstützung des Kupplungsbolzens 50 an einer Innenseite des Gewölbes 16 oder zumindest an einer Innenseite 28 der Einsetzöffnung 12. Die perspektivische Darstellung der Einsetzöffnung 12 und des Aufnahme- bzw. Befestigungsraums 18 zeigt Figur 6.

Die Einsetzöffnung 12 ist von einem Befestigungsbund 30 umgeben. Dieser schließt eine ebene Einsetzfläche 32 ein, die die Form der Einsetzöffnung 12 darstellt. Die Einsetzfläche 32 bildet somit den gedachten Abschluss des Aufnahmeraums 18 gegenüber der Kugelpfanne 26.

Die Einsetzöffnung 12 und die Einsetzfläche 32 haben eine unrunde, bevorzugt nichteckige oder eckige Form. Vorzugsweise ist die Einsetzöffnung 12 oval geformt, sodass sie mit einer Längsachse A_{L} und einer senkrecht dazu verlaufenden Querachse A_{Q} beschreibbar ist (siehe Figur 6a). In gleicher Weise ist es bevorzugt, die Einsetzöffnung 12 in Rechteckform mit einer langen und einer kurzen Seite auszubilden. In diesem Fall ist sie ebenfalls mit Hilfe der Längsachse A_{L} und der Querachse A_{Q} beschreibbar.

Vorzugsweise ist die Einsetzöffnung 12 in der ovalen Form symmetrisch zur Längsachse A_{L} und zur Querachse A_{Q}. Weiterhin bevorzugt wird die Form der Einsetzöffnung 12 und somit auch der Einsetzfläche 32 durch ein zentrales Parallelogramm P und zwei einander gegenüberliegend angeordnete Kreisbögen KB gebildet (siehe Figur 6b). Die Kreisbogenbereiche K_{B} stellen vorzugsweise die Anlagebereiche des Befestigungsbunds 32 dar, an denen der zylindrische Schaft 54 des Kupplungsbolzens 50 bei maximaler Winkelauslenkung anliegt. Beispielgebend für eine rechteckige Einsetzöffnung 12 ist bevorzugt das Parallelogramm P ohne die Kreisbögen KB.

Die einander gegenüberliegenden Seiten des Parallelogramms P, die nicht an die Kreisbögen KB angrenzen, veranschaulichen bevorzugt innere gerade verlaufende Wandabschnitte 28 der Einsetzöffnung 12 oder der Kupplungsaufnahme 10. Diese gerade verlaufenden Wandabschnitte stützen den zylindrischen Schaft 56 des Kupplungsbolzens 50 seitlich ab und/oder beschränken dessen seitliche Auslenkung in Richtung der Querachse A_{Q}. Somit gewährleisten die Wandabschnitte 28 oder eine entsprechende Begrenzung des Befestigungsbunds 30, dass der Kupplungsbolzen 50 nur in seiner Schwenkebene an winklige Orientierungen der zu verbindenden Bauteile 80, 90 anpassbar ist. Es versteht sich, dass zu diesem Zweck die Wandabschnitte 28 bzw. die entsprechenden Bereiche des Befestigungsbunds 30 den zylindrischen Schaft 56 des Kupplungsbolzens 50 nicht einklemmen müssen, sondern mit einem die Schwenkbewegung erlaubenden Spalt dazu angeordnet sein sollten.

Die Einsetzrichtung R ist durch den Verlauf einer Geraden beschrieben. Diese verläuft bevorzugt durch einen Punkt der Längsachse A_{L} der Einsetzöffnung 12 bzw. der diese repräsentierende Einsetzfläche 32 und durch einen geometrischen Mittelpunkt M der Kugelpfanne 26. Selbst wenn die Kugelpfanne 26 allgemein als Aufnahme für den Kupplungskopf 52 ausgebildet ist, klemmt sie den Kupplungskopf 52 in einer zentrierten Position, wodurch auch ein geometrischer Mittelpunkt der Aufnahme festgelegt ist.

Des Weiteren zwingen die bevorzugt gerade verlaufenden Abschnitte der längeren Seiten 14 der Einsetzöffnung 12 den Kupplungsbolzen 50 in eine mittige Position zwischen diesen längeren Seiten 14. Im verrasteten Zustand des Kupplungsbolzens 50 verläuft daher dessen Längsachse L bevorzugt durch den geometrischen Mittelpunkt M der Kugelpfanne 26 und einen Punkt der Längsachse A_{L} der Einsetzöffnung 12.

Die Größe des ebenen Schwenkwinkels α des Kupplungsbolzens 50 ist durch die beidseitig angrenzende Innenwand 52 des Gewölbes 16 begrenzt. An der Innenwand 22 liegt der Kupplungsbolzen 50 über den zylindrischen Schaft 56 bevorzugt an, wenn der Kupplungsbolzen 50 maximal verschwenkt worden ist.

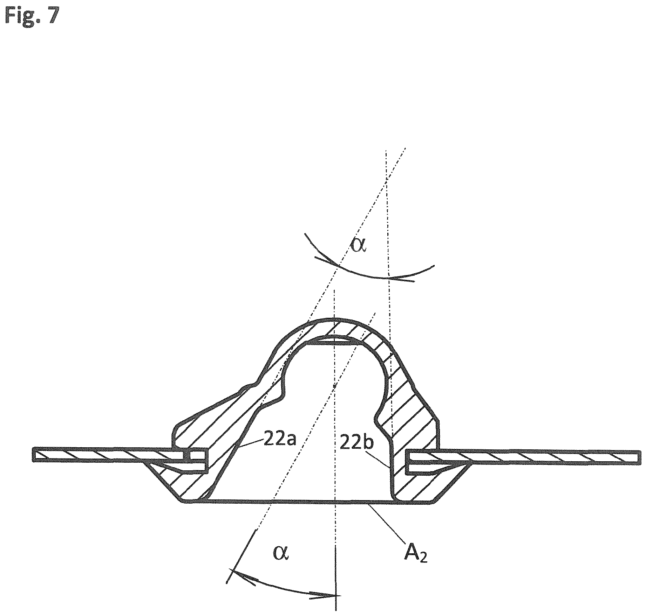

Nähert man die einander gegenüberliegenden Innenwandabschnitte 22a, 22b, an denen der Kupplungsbolzen 50 bei maximaler Auslenkung anliegt, durch Geraden (siehe gestrichelte Linien in Figur 7) an, dann definiert deren Schnittpunkt den maximalen ebenen Schwenkwinkel α des Kupplungsbolzens 50. Vorzugsweise ist der Kupplungsbolzen 50 im verrasteten Zustand in einem Winkelbereich von 0° < α ≤ 60°, vorzugsweise 0° < α ≤ 45° oder 0° < α ≤ 35° innerhalb des kuppelartigen Gewölbes eben verschwenkbar.

Gemäß der in Figur 7 dargestellten Ausführungsform der Kupplungsaufnahme 10 ist die Innenwand 22a annähernd senkrecht zur Einsetzfläche oder zur Längsachse A_{L} der Einsetzöffnung 12 angeordnet. Es ist ebenfalls bevorzugt, auch die Innenfläche 22a in einem spitzen Winkel in Bezug auf die Einsetzfläche oder die Längsachse A_{L} der Einsetzöffnung 12 anzuordnen, um den ebenen Schwenkwinkel α des Kupplungsbolzens 50 zu vergrößern. In dieser bevorzugten Ausführungsform wären beide Innenflächen 22a, 22b in einem spitzen Winkel zur Einsetzfläche angeordnet.

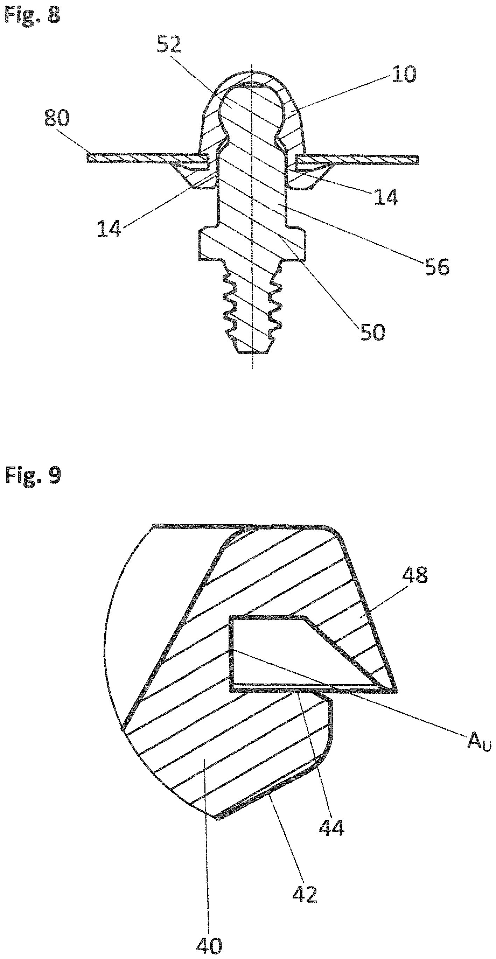

Figur 8 zeigt einen seitlichen Schnitt entlang der Längsachse L des Kupplungsbolzens 50 und parallel zur Querachse A_{Q} der Einsetzfläche bzw. der Einsetzöffnung 12. Es ist erkennbar, dass die längeren Seiten 14 der Einsetzöffnung 12 den zylindrischen Schaft 56 des Kupplungsbolzens 50 bevorzugt stützen und in die Orientierung der Schwenkebene zwingen. Damit ist eine Auslenkung des Kupplungsbolzens 50 aus der oben beschriebenen Schwenkebene heraus verhindert.

Bezugnehmend auf Figur 5 weist die Kupplungsaufnahme 10 an der Außenseite mehrere Rastnasen 40 mit Installationsschrägen 42 auf. Wird die Kupplungsaufnahme 10 in die Installationsöffnung 82 des Bauteils 80 gedrückt, gleitet ein Rand der Installationsöffnung 82 auf der Installationsschräge 42 entlang und verrastet sich zwischen einer Rastfläche 44 und einer Anlagefläche 46. Die Rastfläche 44 bildet einen Hinterschnitt gegen ein Herauslösen der Kupplungsaufnahme 10 aus der Installationsöffnung 82.

Am Befestigungsbund 30 ist zudem ein umlaufender Dichtkragen 48 angeordnet. Dieser ist in Richtung der Rastnasen 40 geneigt. Ein installierter Rand der Installationsöffnung 82, der zwischen dem Dichtkragen 48 und den Rastflächen 44 angeordnet ist, wird daher vom Dichtkragen 48 gegen die Rastflächen 44 gedrückt. Da sich der Dichtkragen 48 zudem bevorzugt an die Oberfläche des Bauteils 80 vollständig anlegt, dichtet er auf diese Weise die Verbindung aus Kupplungsaufnahme 10 und Bauteil 80 nach außen ab. Vorzugsweise erstreckt sich dazu der Dichtkragen 48 bis auf die Höhe der Rastflächen 44, wie es in Figur 9 gezeigt ist.

Es ist des Weiteren bevorzugt, den Verlauf und die Anordnung der äußeren Umfangsfläche A_{U} der Kupplungsaufnahme 10 derart an den Verlauf des Rands und die Größe der Installationsöffnung 82 anzupassen, dass die Kupplungsaufnahme 10 in einem radialen Presssitz in der Installationsöffnung 82 gehalten wird. Auf diese Weise werden Belastungen der Kupplungsaufnahme 10 durch Schwingungen des Bauteils 80 reduziert und die Lebensdauer der Kupplungsaufnahme 10 und damit auch der Verbindung aus Kupplungsaufnahme 10 und Kupplungsbolzen 50 erhöht.

Gemäß einer ersten bevorzugten Ausführungsform vorliegender Erfindung wird die oben beschriebene Kupplungsaufnahme im Rahmen eines Spritzgussverfahrens hergestellt. Zu diesem Zweck wird eine Spritzgussform angefertigt, die die oben beschriebenen oder eine Auswahl der oben beschriebenen bevorzugten konstruktiven Merkmale der Kupplungsaufnahme in komplementärer Form definiert. Sobald diese Spritzgussform vorliegt, erfolgt in einem zweiten Verfahrensschritt das Spritzgießen der Kupplungsaufnahme 10 in der Spritzgussform. Nach Aushärten der Kupplungsaufnahme 10 in der Spritzgussform wird diese in einem weiteren Schritt aus der Spritzgussform entformt.

Alternativ zu einem Spritzgussverfahren ist es ebenfalls bevorzugt, die Kupplungsaufnahme mit den oben beschriebenen konstruktiven Merkmalen oder eine Auswahl davon mithilfe eines additiven Verfahrens herzustellen. Derartige additive Verfahren sind auch als 3D-Druckverfahren bekannt.

Vorzugsweise wird die Kupplungsaufnahme 10 aus einem Material der TPE-Familie hergestellt. Dieses Material kann je nach Anwendungsfall mit unterschiedlichen Härten ausgestattet sein. Zur TPE-Familie gehören beispielsweise die Santoprene oder das Amitel. Gemäß einer bevorzugten Ausführungsform besteht die Kupplungsaufnahme 10 aus Arnitel mit einer Härte von 33 Shore D. Dieses Material liefert eine glatte Oberfläche, sodass die Montage der Kupplungsaufnahme 10 in der Installationsöffnung 82 unterstützt wird. Es ist ebenfalls bevorzugt, die Härte des Materials derart einzustellen, dass sie die Installation der Kupplungsaufnahme 10 in der Installationsöffnung 82 unterstützt. Entsprechend kann die oben genannte Härte des Materials verringert oder erhöht werden.

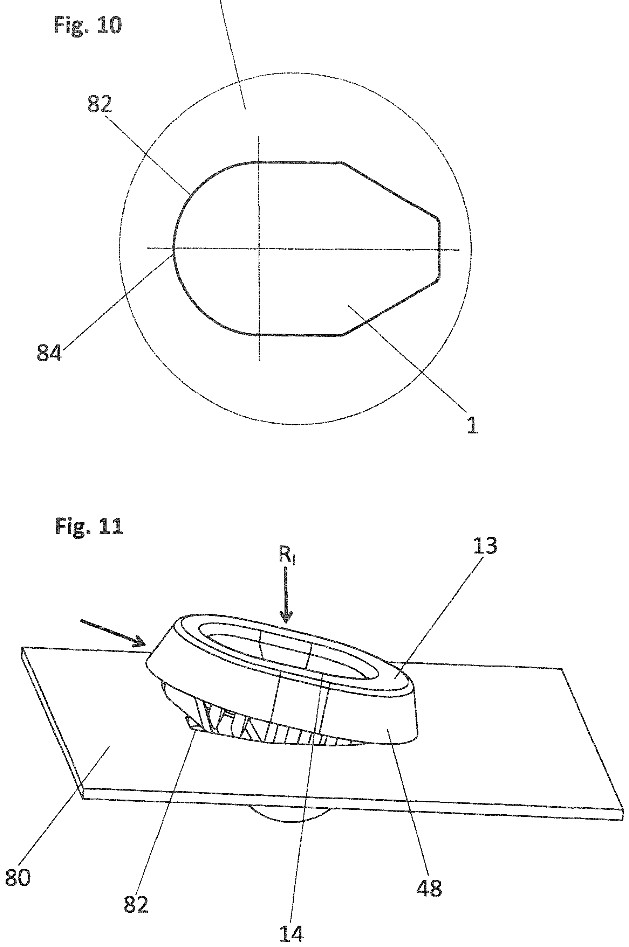

Bezug nehmend auf Figur 10 ist die Installationsöffnung 82 in ihrer Form bevorzugt an die äußere Gestalt bzw. den Verlauf der äußeren Umfangsfläche A_{U} oder Kupplungsaufnahme 10 angepasst. Entsprechend der unterschiedlichen bevorzugten Ausgestaltungen der Einsetzöffnung 12 (siehe oben) ist auch die Installationsöffnung 82 geformt. Daher ist es ebenfalls bevorzugt, die Installationsöffnung 82 rechteckig auszubilden (nicht gezeigt). Um die Kupplungsaufnahme 10 in der Installationsöffnung 82 zu installieren, wird zunächst ein Öffnungsrand 84 benachbart zu einer kürzeren Seite 13 der Installationsöffnung 12 zwischen dem Dichtkragen 48 und mindestens einer Rastfläche 44 eingeklemmt. In einem darauffolgenden Installationsschritt wird ein stiftähnliches Werkzeug in den Aufnahmeraum 18 der Kupplungsaufnahme 10 eingesetzt und die Kupplungsaufnahme 10 in Installationsrichtung R_{I} in die Installationsöffnung 82 gedrückt. Aufgrund dieses Drucks, der durch das eingesetzte Werkzeug aufgebracht wird, verlängert sich die Kupplungsaufnahme 10 in Installationsrichtung. Dies führt gleichzeitig dazu, dass sie sich in radialer Richtung verjüngt, sodass der Rand 84 der Installationsöffnung 82 leichter auf den Installationsschrägen 42 abgleiten kann und zwischen den Rastflächen 44 und dem Dichtkragen 48 einschnappt. Das Verrasten des Rands 84 zwischen den Rastflächen 44 und dem Dichtkragen 48 führt ebenfalls dazu, dass die Verbindung zwischen Bauteil 80 und Kupplungsaufnahme 10 durch den umlaufenden Dichtkragen 48 abgedichtet wird.

Sobald die Kupplungsaufnahme 10 verlässlich in der Installationsöffnung 80 angeordnet ist, kann der Kupplungskopf 52, vorzugsweise ein Kugelkopf, des Kupplungsbolzens 50 in die Kupplungsaufnahme 10 eingerastet werden.

### Bezugszeichenliste

- 1: Winkelkupplung
- 10: Kupplungsaufnahme
- 12: Einsetzöffnung
- 13: kürzere Seite der Einsetzöffnung
- 14: längere Seite der Einsetzöffnung
- 16: Gewölbe
- 18: Aufnahme- bzw. Befestigungsraum
- 20: Wand
- 22: Innenwand
- 94: Raststeg
- 26: Kugelpfanne
- 28: Innenseite der Einsetzöffnung
- 30: Befestigungsbund
- 40: Rastnasen
- 42: Installationsschräge
- 44: Rastflächen
- 46: Anlageflächen
- 48: Dichtkragen
- 50: Kupplungsbolzen
- 52: Kupplungskopf
- 54: verjüngter Abschnitt
- 56: zylindrischer Schaft
- 58: Befestigungsende
- 80: erstes Bauteil
- 82: Installationsöffnung
- 84: Rand der Installationsöffnung
- 90: zweites Bauteil
- L: Längsachse des Kupplungsbolzens 50
- A_{L}: Längsachse der Einsetzöffnung
- A_{Q}: Querachse der Einsetzöffnung
- P: Parallelogramm
- KB: Kreisbögen
- R_{I}: Installationsrichtung
- R: Einsetzrichtung
- A_{U}: äußere Umfangsfläche der Kupplungsaufnahme

## Patentansprüche

1. Kupplungsaufnahme (10), in der ein Kopf (52) eines Kupplungsbolzens (50) zur Befestigung von zumindest zwei Bauteilen aneinander verrastbar ist und die die folgenden Merkmale aufweist:
a. ein kuppelartiges Gewölbe (16) aus einer umlaufenden Wand, welches ein offenes Ende mit einer Einsetzöffnung (12) für ein Einstecken des Kupplungsbolzens (50) in einer Einsetzrichtung R und ein Ende mit einer dazu benachbarten inneren Verraststruktur (24) für den Kopf (52) des Kupplungsbolzens (50) aufweist,
b. einen Befestigungsbund (30), der die Einsetzöffnung (12) umgibt und der eine Öffnungsfläche der Einsetzöffnung (12) einschließt, und
c. die Einsetzöffnung (12) hat eine unrunde Form, sodass die Öffnungsfläche durch eine Längsachse A_{L} und eine dazu quer verlaufende kürzere Querachse A_{Q} beschreibbar ist, **dadurch gekennzeichnet, dass**
d. das kuppelartige Gewölbe (16) eine Schwenkebene aufgespannt durch die Längsachse A_{L} der Einsetzöffnung (12) und die Einsetzrichtung R einschließt, wobei ein maximaler ebener Schwenkwinkel in der Schwenkebene definiert wird durch Geraden, die durch eine Annäherung von einander entlang der Längsachse (A_{L}) gegenüberliegenden Innenwandabschnitten (22a, 22b) gebildet sind und einen Schnittpunkt aufweisen, sodass, wenn der Kopf (52) des Kupplungsbolzens (50) in der inneren Verraststruktur (24) verrastet ist, die Schwenkebene eine variable Winkelorientierung des Kupplungsbolzens (50) in einem ebenen Winkelbereich definiert, der maximal durch eine Innenwand (22) des kuppelartigen Gewölbes (16) begrenzt ist.

2. Kupplungsaufnahme (10) gemäß Patentanspruch 1, in der die Einsetzöffnung (12) oval geformt ist.

3. Kupplungsaufnahme (10) gemäß Patentanspruch 1 oder 2, in der ein verrastbarer Kupplungsbolzen (50) in einem Winkelbereich von 0 < α ≤ 60°, vorzugsweise 0° < α ≤ 45° oder 0° < α ≤ 35°, innerhalb des kuppelartigen Gewölbes (16) schwenkbar ist, wenn der Kopf (52) des Kupplungsbolzens (50) in der inneren Verraststruktur (24) verrastet ist.

4. Kupplungsaufnahme (10) gemäß einem der Patentansprüche 1 bis 3, die zwei einander gegenüberliegende Abschnitte (14), vorzugsweise Wandabschnitte, aufweist, die senkrecht zur Querachse A_{Q} angeordnet sind und eine seitliche Führung des verrastbaren Kupplungsbolzens (50) bei variabler Winkelorientierung des Kupplungsbolzens (50) bilden.

5. Kupplungsaufnahme (10) gemäß einem der vorhergehenden Patentansprüche, deren umlaufende Wand an einer radialen Außenseite benachbart zum Befestigungsbund (30) eine Mehrzahl umfänglich verteilter Rastnasen (40) mit Einführschräge (42) aufweist, die einen Hinterschnitt (44) entgegen der Einsetzrichtung R bilden.

6. Kupplungsaufnahme (10) gemäß einem der vorhergehenden Patentansprüche, deren Befestigungsbund (30) einen umfänglich angeordneten, sich in Einsetzrichtung R der Kupplungsaufnahme (10) erstreckenden flexiblen Dichtkragen (48) aufweist, der sich bevorzugt bis auf eine Höhe des durch die Rastnasen (40) gebildeten Hinterschnitt (44) erstreckt.

7. Kupplungsaufnahme (10) gemäß einem der vorhergehenden Patentansprüche, die am Ende des Gewölbes (16) eine teilweise offene oder geschlossene Kugelpfanne (26) in Kombination mit einem von einer Innenwand des Gewölbes radial einwärts ragenden Raststeg (24) aufweist.

8. Winkelkupplung (1) zur Befestigung eines ersten Bauteils (90), insbesondere ein Anbauteil im Kraftfahrzeug, an einem zweiten Bauteil (80), insbesondere eine Fahrzeugrohbaustruktur, die einen Kupplungsbolzen (50) mit einem Kopf (52) und eine Kupplungsaufnahme (10) gemäß einem der vorhergehenden Patentansprüche aufweist, in der der Kupplungsbolzen (50) in einem ebenen Winkelbereich verschwenkbar ist, während der Kopf (52) des Kupplungsbolzens (50) lösbar oder nicht lösbar verrastet ist.

9. Herstellungsverfahren für eine Kupplungsaufnahme (10), **gekennzeichnet durch** die folgenden Schritte:
a. Bereitstellen (I) einer Spritzgussform, die die Form der Kupplungsaufnahme gemäß einem der vorhergehenden Patentansprüche 1 bis 7 definiert,
b. Spritzgießen (II) der Kupplungsaufnahme in der Spritzgussform und
c. Entformen (III) der Kupplungsaufnahme aus der Spritzgussform.

10. Herstellungsverfahren für eine Kupplungsaufnahme (10), **dadurch gekennzeichnet, dass** die Kupplungsaufnahme (10) gemäß einem der Patentansprüche 1 bis 7 mit einem additiven Verfahren hergestellt wird.

11. Installationsverfahren für die Kupplungsaufnahme (10) gemäß einem der Patentansprüche 1 bis 7 in einer unrunden Installationsöffnung (82) mit Öffnungsrand (84) eines Bauteils (80), welches die folgenden Schritte aufweist:
a. angrenzend an ein Ende der Längsachse A_{L} der Öffnungsfläche der Einsetzöffnung (12) Einklemmen (A) eines Abschnitts des Öffnungsrands (84) zwischen mindestens einer Rastnase (40) und dem Befestigungsbund (30),
b. Längen (B) der Kupplungsaufnahme (10) in Einsetzrichtung R und Versetzen (C) der Kupplungsaufnahme (10) in Einsetzrichtung R in die Installationsöffnung (82) und
c. Verrasten (D) der Kupplungsaufnahme (10) in der Installationsöffnung (82), in dem der Öffnungsrand (84) zwischen einer Mehrzahl von Rastnasen (40) und dem Befestigungsbund (30) gehalten wird.

## Claims

1. Coupling socket (10) in which a head (52) of a coupling bolt (50) for fastening at least two components together is lockable and which comprises the following features:
a. a dome-like arch (16) of a circumferential wall which comprises an open end with an insertion opening (12) for a pushing-in of the coupling bolt (50) in an insertion direction R and an end with an inner locking structure (24) adjacent thereto for the head (52) of the coupling bolt (50),
b. a fastening collar (30) surrounding the insertion opening (12) and enclosing an opening face of the insertion opening (12), and
c. the insertion opening (12) has a non-round shape so that the opening face can be described by a longitudinal axis A_{L} and a shorter transverse axis A_{Q} extending transverse thereto, **characterized in that**
d. the dome like arch (16) encloses a swivel plane which is spanned by the longitudinal axis A_{L} of the insertion opening (12) and the insertion direction R, wherein a maximum plane swivel angle is defined in the swivel plane by means of straight lines, which are formed by an approximation of inner wall sections (22a, 22b) arranged opposite one another along the longitudinal axis (A_{L}) and which have an intersection, so that when the head (2) of the coupling bolt (50) is locked in the inner locking structure (24), the swivel plane defines a variable angular orientation of the coupling bolt (50) in a plane angle range which is delimited at the maximum by an inner wall (22) of the dome-like arch (16).

2. Coupling socket (10) according to claim 1, in which the insertion opening (12) has an oval shape.

3. Coupling socket (10) according to claim 1 or 2, in which a lockable coupling bolt (50) can be pivoted in an angle range of 0 < α ≤ 60°, preferably 0° < α ≤ 45° or 0° < α ≤ 35° within the dome like arch (16) when the head (52) of the coupling bolt (50) is locked within the inner locking structure (24).

4. Coupling socket (10) according to one of the claims 1 to 3, comprising two sections (14) opposite to each other, preferably wall sections, which are arranged perpendicular to the transverse axis A_{Q} and which form a lateral guiding of the lockable coupling bolt (50) at variable angular orientations of the coupling bolt (50).

5. Coupling socket (10) according to one of the preceding claims, the circumferential wall of which comprises at a radial outer side adjacent to the fastening collar (30) a plurality of circumferentially distributed locking noses (40) with inserting slants (42) which form an undercut (44) opposite to the insertion direction R.

6. Coupling socket (10) according to one of the preceding claims, the fastening collar (30) of which comprises a circumferentially arranged flexible sealing collar (48) extending in insertion direction R of the coupling socket (10) and extending preferably up to a height of the undercut (44) formed by the locking noses (40).

7. Coupling socket (10) according to one of the preceding claims, comprising at the end of the arch (16) a partly open or closed ball socket (26) in combination with a locking web (24) projecting radially to the inside from an inner wall of the arch.

8. Angular coupling (1) for fastening a first component (90), especially a mounting part in the vehicle, to a second component (80), especially a vehicle body structure, comprising a coupling bolt (50) having a head (52) and a coupling socket (10) according to one of the preceding claims in which the coupling bolt (50) can be pivoted in a plane angle range while the head (52) of the coupling bolt (50) is locked releasably or not releasably.

9. Manufacturing method for a coupling socket (10), **characterized by** the following steps:
a. providing (I) an injection mold defining the shape of the coupling socket according to one of the preceding claims 1 to 7,
b. injection molding (II) of the coupling socket in the injection mold and
c. demolding (III) the coupling socket from the injection mold.

10. Manufacturing method for a coupling socket (10), **characterized in that** the coupling socket (10) according to one of the preceding claims 1 to 7 is manufactured by means of an additive method.

11. Installation method for the coupling socket (10) according to one of the claims 1 to 7 in a non-round installation opening (82) with opening edge (84) of a component (80), which comprises the following steps:
a. adjacent to an end of the longitudinal axis A_{L} of the opening face of the insertion opening (12), clamping (A) a section of the opening edge (84) between at least a locking nose (40) and the fastening collar (30),
b. lengthening (B) the coupling socket (10) in insertion direction R and displacing (C) the coupling socket (10) in insertion direction R into the installation opening (82) and
c. locking (D) the coupling socket (10) in the installation opening (82) by retaining the opening edge (84) between a plurality of locking noses (40) and the fastening collar (30).

## Revendications

1. Logement d'accouplement (10), dans lequel une tête (52) d'un boulon d'accouplement (50) destiné à la fixation d'au moins deux composant l'un à l'autre peut être encliquetée, et lequel présente les caractéristiques suivantes :
a. un dôme du genre coupole (16) constitué d'une paroi périphérique, lequel présente une extrémité ouverte avec une ouverture d'engagement (12) destinée à l'insertion du boulon d'accouplement (50) dans une direction d'engagement R et une extrémité avec une structure d'encliquetage intérieure (24) adjacente à celle-ci pour la tête (52) du boulon d'accouplement (50),
b. un collet de fixation (30) entourant l'ouverture d'engagement (12) et incluant une surface d'ouverture de l'ouverture d'engagement (12), et
c. l'ouverture d'engagement (12) présente une forme non-circulaire, de sorte que la surface d'ouverture peut être décrite par un axe longitudinal A_{L} et un axe transversal A_{Q} plus court s'étendant perpendiculairement à celui-ci, **caractérisé en ce que**
d. le dôme du genre coupole (16) inclut un plan de pivotement déterminé par l'axe longitudinal A_{L} de l'ouverture d'engagement (12) et la direction d'engagement R, dans lequel un angle de pivotement plan maximal est défini dans le plan de pivotement par des droites formées par une convergence de sections de paroi intérieure (22a, 22b) opposées l'une à l'autre le long de l'axe longitudinal (A_{L}) et présentant un point d'intersection, de telle façon que lorsque la tête (52) du boulon d'accouplement (50) est encliquetée dans la structure d'encliquetage intérieure (24), le plan de pivotement définit une orientation angulaire variable du boulon d'accouplement (50) dans une plage angulaire plane, laquelle est limitée par une paroi intérieure (22) du dôme du genre coupole (16).

2. Logement d'accouplement (10) selon la revendication 1, dans lequel l'ouverture d'engagement (12) est de forme ovale.

3. Logement d'accouplement (10) selon la revendication 1 ou 2, dans lequel un boulon d'accouplement encliquetable (50) peut pivoter dans une plage angulaire de 0 < α ≤ 60°, de préférence de 0° < α ≤ 45° ou de 0° < α < 35°, à l'intérieur du dôme du genre coupole (16) lorsque la tête (52) du boulon d'accouplement (50) est encliquetée dans la structure d'encliquetage intérieure (24).

4. Logement d'accouplement (10) selon l'une des revendications 1 à 3, lequel présente deux sections (14) opposées l'une à l'autre, de préférence des sections de paroi, lesquelles sont disposées perpendiculairement à l'axe transversal A_{Q} et forment un guidage latéral du boulon d'accouplement encliquetable (50) en présence d'une orientation angulaire variable du boulon d'accouplement (50).

5. Logement d'accouplement (10) selon l'une des revendications précédentes, dont la paroi périphérique présente une pluralité de nez d'encliquetage (40) répartis de façon périphérique avec un biseau d'introduction (42) de façon adjacente au collet de fixation (30) sur un côté extérieur radial, lesquels forment une contre-dépouille (44) contre la direction d'engagement R.

6. Logement d'accouplement (10) selon l'une des revendications précédentes, dont le collet de fixation (30) présente un col d'étanchéité flexible (48) disposé de façon périphérique, s'étendant dans la direction d'engagement R du logement d'accouplement (10), lequel s'étend de préférence jusqu' à une hauteur de la contre-dépouille (44) formée par les nez d'encliquetage (40).

7. Logement d'accouplement (10) selon l'une des revendications précédentes, lequel présente un coussinet sphérique (26) partiellement ouvert ou fermé à l'extrémité du dôme (16), en combinaison avec une nervure d'encliquetage (24) faisant saillie radialement vers l'intérieur à partir d'une paroi intérieure du dôme.

8. Accouplement d'angle (1) pour la fixation d'un premier composant (90), en particulier un accessoire dans le véhicule automobile, à un deuxième composant (80), en particulier une structure de carrosserie de véhicule, lequel présente un boulon d'accouplement (50) avec une tête (52) et un logement d'accouplement (10) selon l'une des revendications précédentes, dans lequel le boulon d'accouplement (50) peut être pivoté dans une plage angulaire plane, tandis que la tête (52) du boulon d'accouplement (50) est encliquetée de façon amovible ou non amovible.

9. Procédé de fabrication pour un logement d'accouplement (10), **caractérisé par** les étapes suivantes :
a. mise à disposition (I) d'un moule d'injection définissant la forme du logement d'accouplement selon l'une des revendications précédentes 1 à 7,
b. moulage par injection (II) du logement d'accouplement dans le moule d'injection et
c. démoulage (III) du logement d'accouplement hors du moule d'injection.

10. Procédé de fabrication pour un logement d'accouplement (10), **caractérisé en ce que** le logement d'accouplement (10) selon l'une des revendications 1 à 7 est fabriqué à l'aide d'un procédé additif.

11. Procédé d'installation du logement d'accouplement (10) selon l'une des revendications 1 à 7 dans une ouverture d'installation non-circulaire (82) avec un bord d'ouverture (84) d'un composant (80), présentant les étapes suivantes :
a. serrage (A) d'une section du bord d'ouverture (84) entre au moins un nez d'encliquetage (40) et le collet de fixation (30) de façon adjacente à une extrémité de l'axe longitudinal A_{L} de la surface d'ouverture de l'ouverture d'engagement (12),
b. étirement (B) du logement d'accouplement (10) dans la direction d'engagement R et déplacement (C) du logement d'accouplement (10) dans la direction d'engagement R dans l'ouverture d'installation (82) et
c. encliquetage (D) du logement d'accouplement (10) dans l'ouverture d'installation (82), en maintenant le bord d'ouverture (84) entre une pluralité de nez d'encliquetage (40) et le collet de fixation (30).
